# EUROPÄISCHE PATENTSCHRIFT

(11) **EP 2 134 589 B1**
(45) Veröffentlichungstag und Bekanntmachung des Hinweises auf die Patenterteilung: **22.09.2010**
(21) Anmeldenummer: 08715745.9
(22) Anmeldetag: 13.02.2008
(51) Int. Cl.: B62D 63/00, B60R 16/03, B60Q 11/00

(54) **ANZEIGE- UND BEDIENEINHEIT FÜR ELEKTRONISCHE ANHÄNGERSYSTEME UND VERFAHREN ZUR KONFIGURATION DER ANZEIGE- UND BEDIENEINHEIT**
DISPLAY AND OPERATING DEVICE FOR ELECTRONIC TRAILER SYSTEMS, AND METHOD FOR THE CONFIGURATION OF THE DISPLAY AND OPERATING DEVICE
UNITE D'AFFICHAGE ET DE COMMANDE POUR DES SYSTEMES ELECTRONIQUES DE REMORQUE, ET PROCEDE DE CONFIGURATION DE L'UNITE D'AFFICHAGE ET DE COMMANDE

(30) Priorität: 08.03.2007 DE 102007011326
(43) Veröffentlichungstag der Anmeldung: 23.12.2009
(73) Patentinhaber: WABCO GmbH, 30453 Hannover (DE)
(72) Erfinder: CONSTABEL, Lars, 31515 Wunstorf (DE); GORCZYCA, Sven, 30419 Hannover (DE); HEISE, Bernd, 30179 Hannover (DE); STENDER, Axel, 31787 Hameln (DE)
(74) Vertreter: Lauerwald, Jörg
(86) Internationale Anmeldenummer: PCT/EP2008/001077
(87) Internationale Veröffentlichungsnummer: WO 2008/107063

(56) Entgegenhaltungen:
- EP-A- 0 659 613
- WO-A-00/24611
- DE-A1- 10 033 345
- DE-U1- 29 517 730

## Beschreibung

Die Erfindung betrifft eine Anzeige- und Bedieneinheit für elektronische Anhängersysteme eines Anhängerfahrzeuges und ein Verfahren zur Konfiguration der Anzeige- und Bedieneinheit.

WO 00/24611 A offenbart dementsprechend eine Anzeige- und Bedieneinheit für elektronische Anhängersysteme eines Anhängerfahrzeuges, die mindestens aufweist: eine fahrzeuginterne Schnittstelle zum Anschluss an eine fahrzeuginterne Datenleitung, einen internen Speicher zum Speichern von über die fahrzeuginterne Schnittstelle aufgenommenen Konfigurationsdaten von Steuereinheiten des Anhängerfahrzeuges, eine Bedieneinheit zum Abfragen der Konfigurationsdaten durch den Benutzer, eine Anzeigeeinrichtung zur Anzeige der Konfigurationsdaten an den Benutzer, eine Steuereinrichtung zum Starten einer Konfiguration, Aufnahme von Konfigurationsdaten über die fahrzeuginterne Schnittstelle, Abspeicherung in dem internen Speicher und Anzeige der Konfigurationsdaten in der Anzeigeeinrichtung, einen Stromversorgungsanschluss zum Anschluss an eine fahrzeuginterne Stromversorgung, wobei die Anzeige- und Bedieneinheit selbsttätig Konfigurationsdaten über die fahrzeuginterne Schnittstelle aufnimmt und abspeichert.

Anhängerfahrzeuge sind in der Regel mit unterschiedlichen Bremssystemen, z. B. EBS (elektronisches Bremssystem, electronic brake system) oder ABS (Antiblockiersystem), insbesondere TEBS-D, TEBS-E, TCS, VCS, und unterschiedlichen weiteren elektronischen Systemen ausgestattet. Als weitere elektronische Systeme können insbesondere pneumatische Niveauregelsysteme bzw. Systeme zur Überprüfung von Fahrzeugdaten wie Achslasten, Luftdruck usw. vorgesehen sein, z. B. IVTM, ECAS und TCE. Hierdurch entsteht eine Vielzahl von möglichen Kombinationen, die von dem Benutzer zu bedienen, durch Anzeigen zu überprüfen und ggf. über externe Rechner zu diagnostizieren sind. Die Anzahl möglicher Kombinationen wird noch dadurch erhöht, dass die eingesetzten Systeme eine Vielzahl von verschiedenen Konfigurationsmöglichkeiten zur Verfügung stellen.

Zur Anzeige und Bedienung der unterschiedlichen Systeme sind kombinierte Anzeige- und Bedieneinheiten wie das SmartBoard von Wabco vorgestellt worden. Die Konfiguration der Systeme erfolgt im Allgemeinen manuell über entsprechende Einstellmenüs. Weiterhin sind Konfigurationen durch an die verschiedenen Steuereinrichtungen angeschlossene externe Geräte bekannt, z. B. PC-Diagnose.

Bevor die manuelle Konfiguration nicht ordnungsgemäß durchgeführt worden ist, stehen dem Benutzer einige Anzeige- bzw. Bedienoptionen sowie Überwachungsoptionen von Systemen und Systemkomponenten nicht zur Verfügung bzw. können nicht genutzt werden. Hierbei ist für den Benutzer noch nicht erkennbar, welche Funktionen der Systeme tatsächlich vorhanden sind, da zum Teil nicht vorhandene Funktionen angezeigt werden. Für die Konfiguration ist in der Regel eine relativ weitgehende Sys-temkenntnis des Bedieners erforderlich, um die Einstellungen ordnungsgemäß vorzunehmen.

Der Einsatz eines externen Gerätes zur Konfiguration ist problematisch, da diese meist nur in Fachwerkstätten vorhanden sind.

Der Erfindung liegt die Aufgabe zu Grunde, eine Anzeige- und Bedieneinheit für elektronische Anhängersysteme eines Anhängerfahrzeuges zu schaffen, die dem Benutzer eine sichere und einfache Konfiguration sowie eine zuverlässige Anzeige und Bedienung der verschiedenen Systemoptionen der Anhängersysteme ermöglicht. Weiterhin soll entsprechend ein für den Benutzer sicheres und zuverlässiges Verfahren zur Konfiguration der Anzeige- und Bedieneinheit geschaffen werden.

Diese Aufgabe wird durch eine Anzeige- und Bedieneinheit nach Anspruch 1 und ein Verfahren nach Anspruch 5 gelöst. Die Unteransprüche beschreiben bevorzugte Weiterbildungen.

Erfindungsgemäß wird somit eine Anzeige- und Bedieneinheit geschaffen, die im Anhängerfahrzeug angebracht wird und eine automatische bzw. selbsttätige Konfiguration durchführt, in der sie die Konfigurationsdaten der vorhandenen Systeme selbsttätig ausliest, in einem internen Speicher abspeichert, und dem Benutzer auf Abfrage zur Verfügung stellt.

Die Anzeige- und Bedieneinheit ermittelt nach ihrem Einbau zunächst selbsttätig den geeigneten Zeitpunkt zur Durchführung der automatischen Konfiguration anhand weniger Bedingungen, nämlich einer erstmaligen Versorgung mit externer Spannung, dem Fehlen einer (ggf. auch manuellen) Konfiguration und dem Vorliegen von Aktivität auf einem fahrzeuginternen Datenübertragungssystem.

Der Einbau der erfindungsgemäßen Anzeige- und Bedieneinheit kann vom Benutzer selbst bzw. mit geringer Fachkenntnis durchgeführt werden, indem diese an der Fahrzeugstruktur bzw. am Fahrzeugrahmen des Anhängerfahrzeuges befestigt und an die fahrzeuginterne Datenleitung, z. B. den CAN-Bus, angeschlossen wird.

Die Anzeige- und Bedieneinheit kann insbesondere selbsttätig erkennen, wenn Systeme hinzukommen oder entfernt werden. Weiterhin kann optional auch die Eingabe entsprechender Konfigurationsdaten durch den Benutzer vorgesehen sein, um eine nachträgliche Änderung zu ermöglichen.

Erfindungsgemäß ist somit die Kombination mit einer hohen oder sogar beliebigen Vielzahl unterschiedlicher Systeme möglich, wobei die Anzeige- und Bedieneinheit dem Bediener die tatsächlich zur Verfügung stehenden Anzeige- und Bedienoptionen bereitstellt.

Die Anzeige- und Bedieneinheit kann mittels ihres internen Energiespeichers, insbesondere einer Batterie bzw. galvanischen Zelle, auch dann Funktionen zur Verfügung stellen, wenn die anderen Systeme nicht mit Spannung versorgt sind, z. B. bei abgekoppeltem Anhängerfahrzeug. Hierbei wird erkannt, dass der Einsatz einer entsprechend langlebigen Batterie für die Anzeige- und Bedieneinheit hinreichend ist; eine derartige Batterie weist eine höhere Temperaturbeständigkeit auf als wieder aufladbare Akkumulatoren.

Vorteilhafterweise ist der Algorithmus manuell aufrufbar und kann dazu benutzt werden, die erfindungsgemäße Anzeige- und Bedieneinheit erneut zu konfigurieren, wenn sie an einem anderen Fahrzeug eingesetzt wird oder wenn neue Systeme hinzugekommen sind.

Erfindungsgemäß sind somit Einbau und Bedienung ohne zusätzliches Equipment bzw. komplexere, spezifische Gerätschaften möglich. Somit muss der Benutzer mit dem Fahrzeug nicht eine spezielle Fachwerkstatt aufrufen.

Die automatische Konfiguration verhindert hierbei Fehler durch einen Bediener und stellt immer die richtigen Bedien- und Anzeigeoptionen zur Verfügung.

Die Erfindung wird im Folgenden anhand der beiliegenden Zeichnung an einer Ausführungsform näher erläutert. Es zeigen:
- Figur 1: ein Blockschaltbild eines Anhängerfahrzeuges mit einer Anzeige- und Bedieneinheit und verschiedenen elektronischen Systemen;
- Fig. 2: den Aufbau der erfindungsgemäßen Anzeige- und Bedieneinheit.

In einem Anhängerfahrzeug 1 sind ein pneumatisches Bremssystem 2 und ein pneumatisches Niveauregelsystem 3 vorgesehen. Das Bremssystem 2, z. B. ein TEBS-D, TEBS-E, TCS, VCS oder anderes ABS bzw. EBS-System weist eine Brems-Steuereinrichtung 4 und eine oder mehrere Radbremsen 5 auf, von denen in der Figur lediglich eine Radbremse 5 gezeigt ist. Hierbei nimmt die Brems-Steuereinrichtung 4 Sensorsignale, insbesondere ABS-Signale S1, Bremsverschleißsignale S2 und Reifenfülldruck-Signale S3 auf und gibt Bremssignale S4 an pneumatische Ein- und Auslassventile der Radbremsen 5 aus.

Das Niveauregelsystem 3, z. B. ein ECAS- oder TCE-System, weist eine Niveauregelungs-Steuereinrichtung 8 und Luftbälge 9 mit internen Ein- und Auslassventilen auf, die durch Signale S5 von der Niveauregelungs- Steuereinrichtung 8 angesteuert werden, die wiederum von an den Luftbälgen 9 angebrachten Sensoren Luftdruck-Signale S6 und Achshöhen-Signale S7 aufnimmt.

Die Brems-Steuereinrichtung 4 und die Niveauregelungs-Steuereinrichtung 8 sind an einen fahrzeuginternen CAN-Bus 10 angeschlossen, an den weitere Baugruppen des Anhängerfahrzeuges 1 angeschlossen sein können.

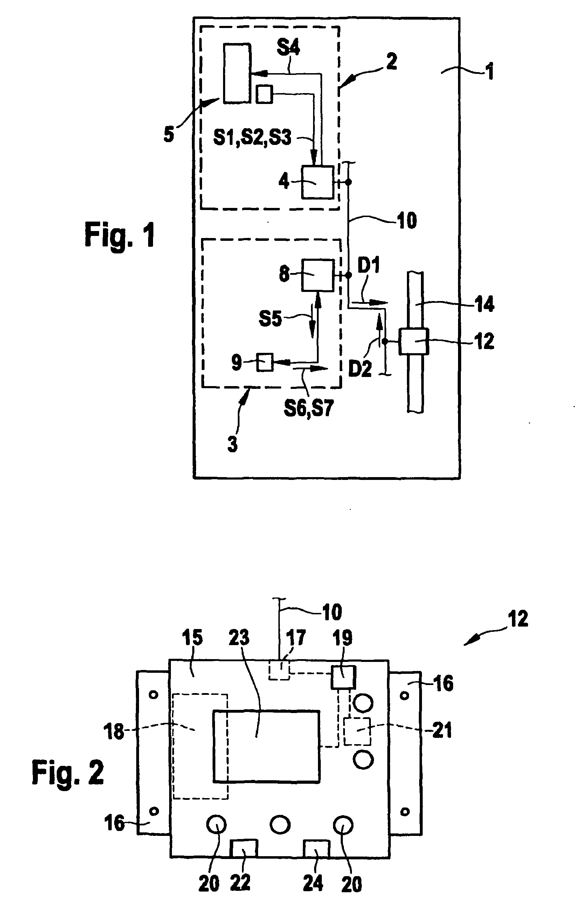

Erfindungsgemäß ist am Fahrzeugrahmen 14 (Fahrzeugstruktur) des Anhängerfahrzeuges 1 eine in Fig. 2 detaillierter gezeigte Anzeige- und Bedieneinheit 12 befestigt, die unter anderem ein Gehäuse 15, Befestigungsmittel 16 zur Befestigung am Fahrzeugrahmen 14, eine Schnittstelle 17 zum Anschluss an den CAN-Bus 10, einen internen Energiespeicher 18 zur autarken Stromversorgung, eine interne Steuereinrichtung 19 zur Steuerung der Funktionen der Anzeige- und Bedieneinheit 12, einen internen Speicher 21, einen Stromversorgungsanschluss 22 zur externen Stromversorgung über die Versorgungsspannung Uv des Anhängerfahrzeuges 1, eine Anzeigeeinrichtung 23 sowie eine Tastatur 20 für den Benutzer auf. Zusätzlich zu der Anzeigeeinrichtung 23 und der Tastatur 20 kann eine weitere Ein- und Ausgabeschnittstelle 24 für den Benutzer vorgesehen sein, z. B. zum Anschluss eines externen Rechners.

Die Anzeige- und Bedieneinheit 12 kann erfindungsgemäß an unterschiedliche Brems-Steuereinheiten 4 und Niveauregelungs-Steuereinheiten 8 sowie ggf. an andere fahrzeuginterne Systeme und Steuereinheiten angeschlossen werden, wozu sie lediglich mit ihrer Schnittstelle 17 an den CAN-Bus 10 anzuschließen ist. Hierbei kann anstelle eines CAN-Bus 10 auch eine andere Datenleitung, z. B. eine K-Line vorgesehen sein.

Die Anzeige- und Bedieneinheit 12 konfiguriert sich selbst und sammelt hierzu Daten von den Steuereinheiten 4 und 8 bzw. fragt diese ab, speichert sie in ihrem internen Speicher 21 und gibt sie an den Benutzer in der Anzeigeeinrichtung 23 und gegebenenfalls durch Datenausgabe über die Benutzerschnittstelle 24 aus. Durch den internen Energiespeicher 18 ist ein Abruf auch bei abgehängtem, isolierten und abgestellten Anhängerfahrzeug 1 möglich.

Weiterhin kann der Benutzer über die Tastatur 20 oder auch die Benutzerschnittstelle 24 Einstelldaten eingeben, was wiederum auch bei isoliertem, abgestellten Anhängerfahrzeug 1 möglich ist. Der interne Energiespeicher 18 ist vorteilhafterweise kein wiederaufladbarer Akku, sondern eine Batterie, da derartige Batterien 18 eine größere Temperaturbeständigkeit und Widerstandsfähigkeit aufweisen. Grundsätzlich kann jedoch auch ein geeigneter wiederaufladbarer Akkumulator vorgesehen sein, der über die Stromversorgungsanschlüsse 22 aufgeladen wird.

Die erfindungsgemäße Anzeige- und Bedieneinheit 12 wird am Fahrzeugrahmen 14 befestigt und mit ihrer CAN-Bus-Schnittstelle 17 an den CAN-Bus 10 angeschlossen. Nachfolgend führt sie eine selbsttätige (automatische) Konfiguration durch. Die Konfiguration wird durchgeführt, wenn folgende Bedingungen erfüllt sind:
- die Anzeige- und Bedieneinheit 12 wird das erste Mal nach ihrem Einbau über ihre Stromversorgungsanschlüsse 22 mit externer Spannung Uv versorgt,
- in ihrem internen Speicher 21 sind noch keine Konfigurationsdaten gespeichert, d. h. eine Konfiguration ist noch nicht durchgeführt worden, und
- sie kann über den CAN-Bus 10 relevante Daten aufnehmen bzw. es liegt Aktivität auf dem CAN-Bus vor.

Die Anzeige- und Bedieneinheit 12 identifiziert die Steuereinheiten 4, 8 und somit die Systeme 2, 3 anhand der auf dem CAN-Bus 10 übertragenen Daten; weiterhin sendet sie Diagnosebefehle D2 an die Steuereinheiten 4, 8 aus und analysiert die über den CAN-Bus 10 aufgenommenen Nachrichten, um Informationen über die Konfiguration der angeschlossenen Systeme 2, 3 zu erhalten. Hierbei findet entsprechend eine Datenverarbeitung in der internen Steuereinrichtung 19 der Anzeige- und Bedieneinheit 12 statt, mit der sie aus den empfangenen Daten D1 die gewünschten Informationen über die Konfiguration des Bremssystems und des Niveauregelungssystems 3 ermittelt.

Die empfangenen und/oder gewonnenen Konfigurationsdaten D1 über die Systeme 2, 3 werden bei der Konfiguration in dem internen Speicher 21 gespeichert. Anhand dieser gespeicherten Konfigurationsdaten D1 kann die Anzeige- und Bedieneinheit 12 dem Benutzer nun die unterstützten Bedien- und Anzeigeoptionen über die Benutzer-Schnittstelle 20 zur Verfügung stellen.

Die Bedien- und Anzeigeoptionen können wegen dem Energiespeicher 18 auch nach einem Reset bzw. im autarken Zustand, bei dem das Anhängerfahrzeug 1 ohne Stromversorgung abgestellt ist, zur Verfügung gestellt werden.

Gemäß einer bevorzugten Weiterbildung ist nicht nur die selbsttätige Konfiguration der Anzeige- und Bedieneinheit 12 über den CAN-Bus 10 bzw. die andere Datenleitung 10, sondern zusätzlich auch manuell möglich. Hierzu ist der in der Anzeige- und Bedieneinheit 12 gespeicherte Algorithmus manuell aufrufbar und kann dazu benutzt werden, die Anzeige- und Bedieneinheit 12 erneut zu konfigurieren, wenn sie an einem anderen Anhängerfahrzeug eingesetzt wird, oder wenn neue Systeme zu den Systemen 2, 3 hinzugekommen sind.

Die gespeicherten Konfigurationsdaten können insbesondere auch zur Überwachung der Konfiguration herangezogen werden, wobei sie mit aktuell ermittelten Konfigurationsdaten verglichen werden. Somit kann z. B. der Ausfall oder Teilausfall einer Einrichtung, z. B. einer oder beider Steuereinheiten 4, 8 erkannt werden, da deren gespeicherte Konfigurationsdaten mit den aktuellen Werten nicht mehr übereinstimmen, insbesondere ganz fehlen können. In diesem Fall kann ein entsprechendes Fehlersignal ausgegeben oder gespeichert werden.

## Patentansprüche

1. Anzeige- und Bedieneinheit (12) für elektronische Anhängersysteme eines Anhängerfahrzeuges (1), die mindestens aufweist:
ein Gehäuse (15) zur Befestigung in oder an dem Anhängerfahrzeug (1), eine fahrzeuginterne Schnittstelle (17) zum Anschluss an eine fahrzeuginterne Datenleitung (10),
einen internen Speicher (21) zum Speichern von über die fahrzeuginterne Schnittstelle (17) aufgenommenen Konfigurationsdaten (D1) von Steuereinheiten (4, 8) des Anhängerfahrzeuges (1),
eine Bedieneinheit (20) zum Abfragen der Konfigurationsdaten durch den Benutzer,
eine Anzeigeeinrichtung (23) zur Anzeige der Konfigurationsdaten (D1) an den Benutzer,
eine Steuereinrichtung (19) zum Starten einer Konfiguration, Aufnahme von Konfigurationsdaten (D1) über die fahrzeuginterne Schnittstelle (17), Abspeicherung in dem internen Speicher (21) und Anzeige der Konfigurationsdaten in der Anzeigeeinrichtung (23),
einen Energiespeicher (18) zur autarken Stromversorgung, und
einen Stromversorgungsanschluss (22) zum Anschluss an eine fahrzeuginterne Stromversorgung,
wobei die Anzeige- und Bedieneinheit (12) selbsttätig Konfigurationsdaten (D1) über die fahrzeuginterne Schnittstelle (17) aufnimmt und abspeichert.

2. Anzeige- und Bedieneinheit nach Anspruch 1, **dadurch gekennzeichnet, dass** die Steuereinrichtung (19) eine Konfiguration durchführt, wenn:
der Stromversorgungsanschluss (22) erstmalig an eine externe Versorgungsspannung angeschlossen ist,
der interne Speicher (21) frei von Konfigurationsdaten (D1) ist, und
die Steuereinrichtung (19) über die fahrzeuginterne Schnittstelle (17) eine Datenübertragung auf der fahrzeuginternen Datenleitung detektiert.

3. Anzeige- und Bedieneinheit nach Anspruch 1 oder 2, **dadurch gekennzeichnet, dass** der Energiespeicher eine wiederaufladbare Batterie (18) ist.

4. Anzeige- und Bedieneinheit nach einem der vorherigen Ansprüche, **dadurch gekennzeichnet, dass** die fahrzeuginterne Schnittstelle (17) eine CAN-Bus-Schnittstelle (17) zum Anschluss an den fahrzeuginternen CAN-Bus (10) ist.

5. Anzeige- und Bedieneinheit nach einem der vorherigen Ansprüche, **dadurch gekennzeichnet, dass** die Steuereinrichtung (19) aus Daten, die sie über die fahrzeuginterne Datenleitung (10) aufgenommen hat, Konfigurationsdaten (D1) ermittelt oder berechnet.

6. Verfahren zum Aufnehmen und Anzeigen von Konfigurationsdaten (D1) eines Anhängerfahrzeuges (1), bei dem
von einer am Anhängerfahrzeug (1) befestigten Anzeige- und Bedieneinheit (12) Konfigurationsdaten (D1) von in dem Anhängerfahrzeug (1) vorgesehenen Steuereinrichtungen (4, 8) über ein fahrzeuginternes Datenübertragungssystem (10) aufgenommen, gespeichert und auf Anfrage über eine Benutzer-Schnittstelle (20) an einen Benutzer ausgegeben werden,
wobei die Konfigurationsdaten (D1) über eine fahrzeuginterne Schnittstelle (17) aufgenommen werden,
wobei eine selbsttätige Konfiguration unter erstmaliger Speicherung der Konfigurationsdaten (D1) der über das fahrzeuginterne Datenübertragungssystem (10) angeschlossene Steuereinheiten (4, 8) durchgeführt wird, wenn die Anzeige- und Bedieneinheit (12) zum ersten Mal mit externer Versorgungsspannung (Uv) versorgt wird,
in dem internen Speicher (21) noch keine Konfigurationsdaten (D1) gespeichert worden sind, und
die Anzeige- und Bedieneinheit (12) über ihre fahrzeuginterne Schnittstelle (17) eine Datenübertragung auf dem fahrzeuginternen Datenübertragungssystem (10) feststellt.

7. Verfahren nach Anspruch 6, **dadurch gekennzeichnet, dass** die Anzeige- und Bedieneinheit (12) aus den aufgenommenen Konfigurationsdaten (D1) weitere Diagnostizierdaten ermittelt und abspeichert.

8. Verfahren nach einem der Ansprüche 6 oder 7, **dadurch gekennzeichnet, dass** die gespeicherten Konfigurationsdaten (D1) von dem Benutzer über eine Eingabeeinrichtung (20), z. B. eine Tastatur und/oder eine Schnittstelle, abrufbar sind.

9. Verfahren nach einem der Ansprüche 6 bis 8, **dadurch gekennzeichnet, dass** Konfigurationsdaten (D1) nachträglich über die Eingabeeinrichtung (20) eingebbar und gespeicherte Konfigurationsdaten (D1) löschbar sind.

10. Verfahren nach einem der Ansprüche 6 bis 9, **dadurch gekennzeichnet, dass** bei Anliegen einer externen Versorgungsspannung diese externe Versorgungsspannung zur Stromversorgung verwendet wird und bei Fehlen einer externen Versorgungsspannung der interne Energiespeicher (18) verwendet wird.

11. Verfahren nach einem der Ansprüche 6 bis 10, **dadurch gekennzeichnet, dass** aktuell Konfigurationsdaten mit den gespeicherten Konfigurationsdaten verglichen werden zur Überwachung der Konfiguration.

## Claims

1. Display and operator control unit (12) for electronic trailer systems of a trailer vehicle (1), which display and operator control unit at least has:
a housing (15) for mounting in or on the trailer vehicle (1),
a vehicle-internal interface (17) for connection to a vehicle-internal data line (10),
an internal memory (21) for storing configuration data (D1), which is received via the vehicle-internal interface (17), from control units (4, 8) of the trailer vehicle (1),
an operator control unit (20) for the user to check the configuration data,
a display device (23) for displaying the configuration data (D1) to the user,
a control device (19) for starting a configuration, receiving configuration data (D1) via the vehicle-internal interface (17), storing the said configuration data in the internal memory (21) and displaying the configuration data on the display device (23),
an energy storage means (18) for autonomous power supply, and
a power supply connection (22) for connection to a vehicle-internal power supply,
with the display and operator control unit (12) automatically receiving configuration data (D1) via the vehicle-internal interface (17) and storing the said configuration data.

2. Display and operator control unit according to Claim 1, **characterized in that** the control device (19) carries out a configuration when:
the power supply connection (22) is connected for the first time to an external supply voltage,
the internal memory (21) is free of configuration data (D1), and
the control device (19) detects data transmission on the vehicle-internal data line via the vehicle-internal interface (17).

3. Display and operator control unit according to Claim 1 or 2, **characterized in that** the energy storage means is a rechargeable battery (18).

4. Display and operator control unit according to one of the preceding claims, **characterized in that** the vehicle-internal interface (17) is a CAN bus interface (17) for connection to the vehicle-internal CAN bus (10).

5. Display and operator control unit according to one of the preceding claims, **characterized in that** the control device (19) ascertains or calculates configuration data (D1) from data which it has received via the vehicle-internal data line (10).

6. Method for receiving and displaying configuration data (D1) of a trailer vehicle (1), in which method a display and operator control unit (12) which is mounted on the trailer vehicle (1) receives configuration data (D1) from control devices (4, 8), which are provided in the trailer vehicle (1), via a vehicle-internal data transmission system (10), stores the said configuration data and outputs the said configuration data to a user via a user interface (20) on request,
with the configuration data (D1) being received via a vehicle-internal interface (17),
with automatic configuration being carried out together with initial storage of the configuration data (D1) of the control units (4, 8), which are connected via the vehicle-internal data transmission system (10), when the display and operator control unit (12) is supplied with an external supply voltage (Uv) for the first time,
no configuration data (D1) has yet been stored in the internal memory (21), and
the display and operator control unit (12) detects data transmission on the vehicle-internal data transmission system (10) via the vehicle-internal interface (17) of the display and operator control unit.

7. Method according to Claim 6, **characterized in that** the display and operator control unit (12) ascertains further diagnostic data from the received configuration data (D1) and stores the said diagnostic data.

8. Method according to either of Claims 6 and 7, **characterized in that** the stored configuration data (D1) can be called up by the user via an input device (20), for example a keypad and/or an interface.

9. Method according to one of Claims 6 to 8, **characterized in that** configuration data (D1) can be input subsequently via the input device (20) and stored configuration data (D1) can be erased.

10. Method according to one of Claims 6 to 9, **characterized in that**, when an external supply voltage is applied, this external supply voltage is used to supply power, and the internal energy storage means (18) is used if there is no external supply voltage.

11. Method according to one of Claims 6 to 10, **characterized in that** actual configuration data is compared with the stored configuration data in order to monitor the configuration.

## Revendications

1. Unité d'affichage et de commande (12) pour systèmes de remorque électroniques d'un véhicule à remorque (1), laquelle présente au moins :
un boîtier (15) destiné à être fixé dans ou sur le véhicule à remorque (1),
une interface (17) interne du véhicule pour le raccordement à une ligne de données (10) interne du véhicule,
une mémoire interne (21) pour mémoriser les données de configuration (D1) d'unités de contrôle (4, 8) du véhicule à remorque (1), enregistrées par le biais de l'interface (17) interne du véhicule,
une unité de commande (20) pour l'interrogation des données de configuration par l'utilisateur,
un dispositif d'affichage (23) pour l'affichage des données de configuration (D1) à l'attention de l'utilisateur,
un dispositif de contrôle (19) pour démarrer une configuration, enregistrer des données de configuration (D1) par le biais de l'interface (17) interne du véhicule, la mémorisation dans la mémoire interne (21) et l'affichage des données de configuration sur le dispositif d'affichage (23),
un accumulateur d'énergie (18) pour l'alimentation électrique autonome et
une borne d'alimentation électrique (22) à raccorder à une alimentation électrique interne du véhicule, l'unité d'affichage et de commande (12) enregistrant et mémorisant de manière autonome les données de configuration (D1) par le biais de l'interface (17) interne du véhicule.

2. Unité d'affichage et de commande selon la revendication 1, **caractérisée en ce que** le dispositif de contrôle (19) effectue une configuration lorsque :
la borne d'alimentation électrique (22) est raccordée pour la première fois à une tension d'alimentation externe,
la mémoire interne (21) est dépourvue de données de configuration (D1) et
le dispositif de contrôle (19) détecte par le biais de l'interface (17) interne du véhicule une transmission de données sur la ligne de données interne du véhicule.

3. Unité d'affichage et de commande selon la revendication 1 ou 2, **caractérisée en ce que** l'accumulateur d'énergie est une batterie rechargeable (18).

4. Unité d'affichage et de commande selon l'une des revendications précédentes, **caractérisée en ce que** l'interface (17) interne du véhicule est une interface de bus CAN (17) à raccorder sur le bus CAN (10) interne du véhicule.

5. Unité d'affichage et de commande selon l'une des revendications précédentes, **caractérisée en ce que** le dispositif de contrôle (19) détermine ou calcule les données de configuration (D1) à partir des données qu'il a enregistrées par le biais de la ligne de données (10) interne du véhicule.

6. Procédé pour enregistrer et afficher des données de configuration (D1) d'un véhicule à remorque (1), selon lequel
des données de configuration (D1) d'une unité d'affichage et de commande (12) fixée au véhicule à remorque (1) sont enregistrées par des dispositifs de contrôle (4, 8) prévus dans le véhicule à remorque (1) par le biais d'un système de transmission (10) interne du véhicule, mémorisées et, sur demande, délivrées à l'attention d'un utilisateur par le biais d'une interface d'utilisateur (20),
les données de configuration (D1) étant enregistrées par le biais d'une interface (17) interne du véhicule, une configuration autonome par première mémorisation des données de configuration (D1) des unités de contrôle (4, 8) raccordées par le biais du système de transmission (10) interne du véhicule étant effectuée lorsque l'unité d'affichage et de commande (12) est alimentée pour la première fois avec une tension d'alimentation externe (Uv),
aucune donnée de configuration (D1) n'a encore été mémorisée dans la mémoire interne (21) et
l'unité d'affichage et de commande (12) constate par le biais de son interface (17) interne du véhicule une transmission de données sur le système de transmission de données (10) interne du véhicule.

7. Procédé selon la revendication 6, **caractérisé en ce que** l'unité d'affichage et de commande (12) détermine et mémorise d'autres données de diagnostic à partir des données de configuration (D1) enregistrées.

8. Procédé selon la revendication 6 ou 7, **caractérisé en ce que** les données de configuration (D1) mémorisées peuvent être consultées par l'utilisateur par le biais d'un dispositif de saisie (20), par exemple un clavier et/ou une interface.

9. Procédé selon l'une des revendications 6 à 8, **caractérisé en ce que** les données de configuration (D1) peuvent être saisies postérieurement par le biais du dispositif de saisie (20) et les données de configuration (D1) mémorisées peuvent être effacées.

10. Procédé selon l'une des revendications 6 à 9, **caractérisé en ce que** lors de l'application d'une tension d'alimentation externe, cette tension d'alimentation externe est utilisée pour l'alimentation électrique et, en l'absence d'une tension d'alimentation externe, c'est l'accumulateur d'énergie interne (18) qui est utilisé.

11. Procédé selon l'une des revendications 6 à 10, **caractérisé en ce que** les données de configuration actuelles sont comparées avec les données de configuration mémorisées pour surveiller la configuration.
